# EUROPEAN PATENT APPLICATION

(11) **EP 4 354 463 A1**
(43) Date of publication of application: **17.04.2024**
(21) Application number: 22201426.8
(22) Date of filing: 13.10.2022
(51) Int. Cl.: G21K 1/00, G02B 6/12

(54) **DEVICE FOR CONTROLLING TRAPPED IONS WITH INTEGRATED WAVEGUIDE**

(71) Applicant: Infineon Technologies Austria AG, 9500 Villach (AT); JOANNEUM RESEARCH Forschungsgesellschaft mbH, 8010 Graz (AT); Universität Innsbruck, 6020 Innsbruck (AT)
(72) Inventor: ROESSLER, Clemens, 9500 Villach (AT); LAMPRECHT, Bernhard, 8010 Graz (AT); MONZ, Thomas, 6103 Reith bei Seefeld (AT); SCHINDLER, Philipp, 6414 Mieming (AT)
(74) Representative: Lambsdorff & Lange Patentanwälte Partnerschaft mbB

(57) **Abstract**

A micro-fabricated device (100) for controlling trapped ions (180) includes a first substrate (120) having a main surface (120A). A structured first metal layer (130) is disposed over the main surface of the first substrate. The structured first metal layer includes electrodes (130_1, 130_2, 130_3) of at least one ion trapping zone configured to trap an ion in a space above the structured first metal layer. A dielectric element (160) is fixedly attached to the first substrate, wherein the dielectric element comprises at least one short-pulse-laser direct written waveguide (170) configured to direct laser light towards an ion trapped in the at least one ion trapping zone.

## Description

### Technical Field

This disclosure relates generally to the field of ion traps, and in particular to ion traps for quantum computing and methods of manufacturing such devices.

### Background

Trapped ions are one of the most promising candidates for use as qubits (quantum bits) in quantum computers since they can be trapped with long lifetimes in a scalable array by virtue of electromagnetic fields. Presently, the most advanced ion traps can control about 50 qubits individually and can maintain up to 16 qubits in a fully entangled state. Future quantum computers will need to increase the number of controllable qubits to more than 100 or even 1000 to outperform classical supercomputers. Further, the number of ions used for each qubit will in future be raised to about 6 to 100 ions in order to allow for more efficient error-correction during quantum computing.

With increasing the number of ions, the area requirement for devices for controlling trapped ions increases. Assuming a mean distance between neighboring ions of 10 to 100 µm and a number of 10000 ions, the total required area may be as large as 100 cm² to 1 m². Hence, increasing the number of simultaneously trapped ions while maintaining the ability to control and measure them individually is one of the main challenges in controlling trapped ions and, in particular, in progressing to practical quantum computing.

The scaling of ion-based quantum devices is hampered by the use of free beam optics to initialize, manipulate and detect quantum information encoded in trapped ions. Free beam optics is susceptible to drifts and vibrations between the optical elements (outside the vacuum chamber) and the ions (inside the vacuum chamber). Further, space issues arise when a plurality of lasers (e.g. 5 to 10) are to be focused on the trapped ions from different directions.

### Summary

According to an aspect of the disclosure, a micro-fabricated device for controlling trapped ions includes a first substrate having a main surface. A structured first metal layer is disposed over the main surface of the first substrate. The structured first metal layer includes electrodes of at least one ion trapping zone configured to trap an ion in a space above the structured first metal layer. A dielectric element is fixedly attached to the first substrate, wherein the dielectric element comprises at least one short-pulse-laser direct written waveguide configured to direct laser light towards an ion trapped in the at least one ion trapping zone.

According to another aspect of the disclosure, a micro-fabricated device for controlling trapped ions includes a first substrate having a main surface. A structured first metal layer is disposed over the main surface of the first substrate. The structured first metal layer comprising electrodes of at least one ion trapping zone configured to trap an ion in a space above the structured first metal layer. The micro-fabricated device includes at least one short-pulse-laser direct written waveguide configured to direct laser light towards an ion trapped in the at least one ion trapping zone, wherein the at least one short-pulse-laser direct written waveguide is formed in the first substrate.

According to another aspect of the disclosure, a micro-fabricated device for controlling trapped ions includes a first substrate having a main surface. A structured first metal layer is disposed over the main surface of the first substrate. The structured first metal layer comprising electrodes of at least one ion trapping zone configured to trap an ion in a space above the structured first metal layer. The micro-fabricated device includes further includes a second substrate spaced apart from the first substrate, wherein the at least one ion trapping zone is located in a space between the first substrate and the second substrate. The second substrate comprises at least one short-pulse-laser direct written waveguide configured to direct laser light towards an ion trapped in the at least one ion trapping zone.

According to another aspect of the disclosure, a method of manufacturing a micro-fabricated device for controlling trapped ions comprises providing a first substrate having a main surface; forming a first metal layer over the main surface of the first substrate; structuring the first metal layer to form electrodes of at least one ion trapping zone configured to trap an ion in a space above the structured first metal layer; and bonding a dielectric element in a positionally fixed relationship to the first substrate, the dielectric element comprises at least one short-pulse-laser direct written waveguide configured to direct laser light towards an ion trapped in the at least one ion trapping zone.

According to another aspect of the disclosure, a method of manufacturing a micro-fabricated device for controlling trapped ions comprises providing a first substrate having a main surface; forming a first metal layer over the main surface of the first substrate; structuring the first metal layer to form electrodes of at least one ion trapping zone configured to trap an ion in a space above the structured first metal layer; and forming at least one short-pulse-laser direct written waveguide in the first substrate, the at least one short-pulse-laser direct written waveguide being configured to direct laser light towards an ion trapped in the at least one ion trapping zone.

According to another aspect of the disclosure, a method of manufacturing a micro-fabricated device for controlling trapped ions comprises providing a first substrate having a main surface; structuring the first metal layer to form electrodes of at least one ion trapping zone configured to trap an ion in a space above the structured first metal layer; bonding a spacer structure to the first substrate; bonding a second substrate to the spacer structure, wherein the second substrate is spaced apart from the first substrate and the at least one ion trapping zone is located in a space between the first substrate and the second substrate; and forming at least one short-pulse-laser direct written waveguide in the second substrate, the at least one short-pulse-laser direct written waveguide being configured to direct laser light towards an ion trapped in the at least one ion trapping zone.

### Brief description of the drawings

The elements of the drawings are not necessarily to scale relative to each other. Like reference numerals designate corresponding similar parts. The features of the various illustrated embodiments can be combined unless they exclude each other and/or can be selectively omitted if not described to be necessarily required. Embodiments are depicted in the drawings and are exemplarily detailed in the description which follows.
Figure 1 is a schematic top perspective view of an exemplary micro-fabricated device for controlling trapped ions.
Figure 2 is a schematic cross-sectional partial view of an exemplary micro-fabricated 2D device for controlling trapped ions.
Figure 3 is a schematic top partial view of an exemplary micro-fabricated device for controlling trapped ions having multiple ion trapping zones.
Figure 4 is a schematic cross-sectional partial view of an exemplary micro-fabricated 3D device for controlling trapped ions, in which the at least one short-pulse-laser direct written waveguide is integrated in a spacer structure.
Figure 5 is a schematic cross-sectional partial view of an exemplary micro-fabricated 2D device for controlling trapped ions, in which the at least one short-pulse-laser direct written waveguide is integrated in the first substrate.
Figure 6 is a schematic cross-sectional partial view of an exemplary micro-fabricated 3D device for controlling trapped ions, in which the at least one short-pulse-laser direct written waveguide is integrated in the second substrate.
Figure 7 is a flowchart illustrating exemplary stages of a method of manufacturing a micro-fabricated device for controlling trapped ions.
Figures 8A-8B illustrate stages of an example of a method of manufacturing a micro-fabricated 2D or 3D device for controlling trapped ions.
Figure 9 is a flowchart illustrating exemplary stages of a method of manufacturing a micro-fabricated device for controlling trapped ions, in which the at least one short-pulse-laser direct written waveguide is integrated in the first substrate.
Figure 10 is a flowchart illustrating exemplary stages of a method of manufacturing a micro-fabricated 3D device for controlling trapped ions, in which the at least one short-pulse-laser direct written waveguide is integrated in the second substrate.

### Detailed description

The words "over" or "on" or "beneath" with regard to a part, element or material layer formed or located or disposed or arranged or placed "over" or "on" or "beneath" a surface may be used herein to mean that the part, element or material layer be located (e.g. placed, formed, arranged, disposed, placed, etc.) "directly on" or "directly under", e.g. in direct contact with, the implied surface. The word "over" or "on" or "beneath" used with regard to a part, element or material layer formed or located or disposed or arranged or placed "over" or "on" or "beneath" a surface may, however, either be used herein to mean that the part, element or material layer be located (e.g. placed, formed, arranged, deposited, etc.) "indirectly on" or "indirectly under" the implied surface, with one or more additional parts, elements or layers being arranged between the implied surface and the part, element or material layer.

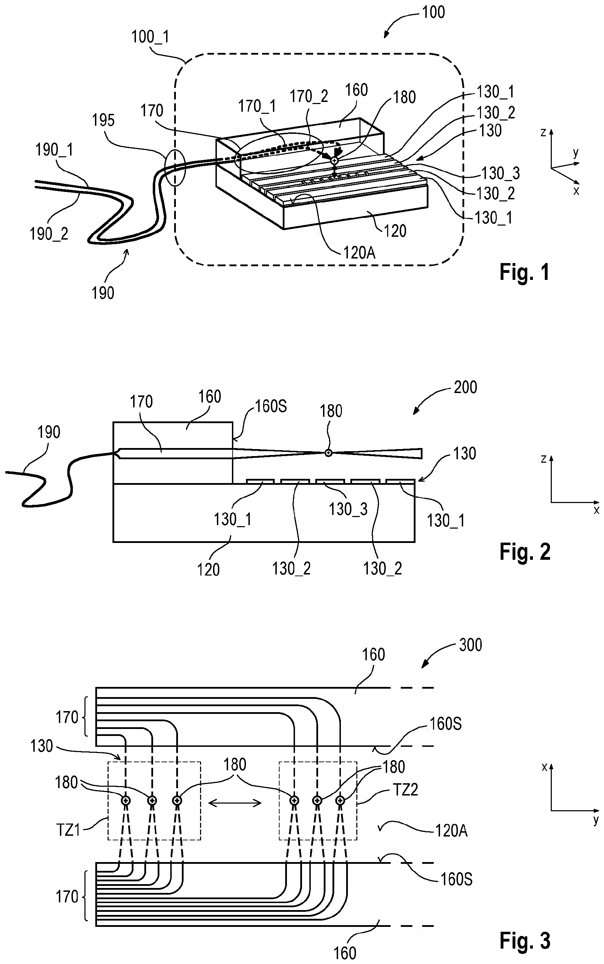

Referring to Figure 1, a micro-fabricated device 100 for controlling trapped ions includes a first substrate 120. The first substrate 120 has an upper main surface 120A. A structured first metal layer 130 is disposed over the upper main surface 120A. The structured first metal layer 130 includes electrodes 130_1, 130_2, 130_3 of at least one ion trapping zone. The ion trapping zone is configured to trap one or more ions 180 in a space above the structured first metal layer 130.

For example, the structured first metal layer 130 may include a central DC electrode 130_3. The central DC electrode 130_3 may, e.g., be arranged between two RF electrodes 130_2. Further, ground electrodes 130_1 may, e.g., be arranged at both sides of the array of DC and RF electrodes 130_3, 130_2. The DC electrode 130_3, the RF electrodes 130_2 and the ground electrodes 130_1 may, e.g., be stripe electrodes which are separate from each other and connected to appropriate DC and RF voltage sources and ground potential, respectively. The electric wiring of the electrodes is not shown in Figure 1.

The electrode pattern of Figure 1 is a mere example, and many other electrode patterns may be used in the micro-fabricated device 100.

In Figure 1 one or a plurality of ions 180 can be controlled in the ion trapping zone (for ease of illustration, only one ion 180 is illustrated in Figure 1). The location of the ion(s) 180 can be controlled by virtue of the electrical voltages applied to the structured first metal layer 130, e.g. the DC voltage applied to the DC electrode 130_3 and the RF voltage applied to the RF electrodes 130_2.

For example, the ion(s) 180 can be moved in space in one or more lateral directions, e.g. in the Y-direction (see Figure 1) or, more generally, in any direction lying in a plane which is normal to the Z-direction. The Z-direction may represent the height dimension of the micro-fabricated device 100. The X-direction and the Y-direction are perpendicular to each other and define a plane in the width and length direction of the micro-fabricated device 100, respectively.

The first substrate 120 may be substantially planar. The upper main surface 120A as well as the structured first metal layer 130 may be perpendicular to the Z-direction. The structured first metal layer 130 may be fabricated by micro-fabrication techniques, e.g. techniques as will be described in more detail further below.

The micro-fabricated device 100 includes a dielectric element 160. The dielectric element 160 is fixedly attached to the first substrate 120. The dielectric element 160 includes at least one short-pulse-laser direct written waveguide, referred to as SPLDW waveguide 170 in the following. The at least one SPLDW waveguide 170 is configured to direct laser light towards the ion(s) 180 trapped in the ion trapping zone.

For example, in Figure 1 two SPLDW waveguides 170_1, 170_2 are illustrated. In general, the number of SPLDW waveguides 170_1, 170_2 formed in the dielectric element 160 may be higher, e.g., equal to or more than three, four, five, six ... to ten waveguides per trapped ion 180. Since the ion trapping zone of Figure 1 may trap a plurality of ions and/or the dielectric element 160 may include SPLDW waveguides 170_1, 170_2 for a plurality of trapping zones of the micro-fabricated device 100 (see, e.g., Figure 3), the at least one SPLDW waveguide 170 may, in practice, be represented by an array of SPLDW waveguides 170_1, 170_2 having a number of equal to or more than 10, 50, 100, 200, etc. SPLDW waveguides.

Each SPLDW waveguide 170_1, 170_2 is a laser-inscribed waveguide which has been directly written into the dielectric element 160 by translating the focal spot of a very short (typically femtosecond) laser pulse through the bulk dielectric material of the dielectric element 160. In other words, SPLDW waveguides are defined by means of local refractive index modifications using short-pulse lasers for their generation. SPLDW waveguides 170_1, 170_2, which are written by a femtosecond pulse laser, are also known as FLDW (femtosecond laser direct written) waveguides.

SPLDW waveguides 170_1, 170_2 may be produced to have a curved shape, allowing to redirect the laser light emitting from each SPLDW waveguide 170_1, 170_2 to intersect, e.g., at the position of an ion 180. In particular, the laser light emitted by two waveguides 170_1, 170_2 may not be parallel, i.e. at an angle to each other. Further, the parameters of the short-pulse direct write laser should be selected to ensure that the SPLDW waveguides 170_1, 170_2 each are prepared as a single mode waveguide which preserves polarization and provides for low losses (e.g. << 10dB) during coupling and decoupling of laser light.

The SPLDW waveguides 170_1, 170_2 may terminate at an exit surface 160S of the dielectric element 160. The exit surface 160S (or more generally, the interface between the dielectric element 160 and the free space in which the ion 180 is located) may be configured to have an optical function (e.g., a light focusing function and/or a light redirecting function and/or a polarization control function and/or an attenuation function, all of which are, for example, frequency dependent) for the laser light emitted from each SPLDW waveguide 170_1, 170_2. For example, the exit surface 160S may be curved to form a lens. In other examples, the exit surface 160S may be provided with another optical transition element such as a grating.

Using at least one (or, more generally, an array of) SPLDW waveguide(s) 170_1, 170_2 integrated in the micro-fabricated device 100 allows to solve the space issues in micro-fabricated ion trap devices, since an array of densely packed waveguides with nearly free choice of curvature, in particular near its optical exit regions, can be implemented. Further, the susceptibility to drifts and vibrations is greatly reduced, since the dielectric element 160 is fixedly attached to the first substrate 120. In other words, this concept using SPLDW waveguides for transmitting laser light "over the final stretch" to the ion(s) reduces both the problem of lack of space and the problem of interference from mechanical influences (e.g. vibrations).

The micro-fabricated device 100 may, e.g., further include at least one optical fiber 190 for supplying the at least one SPLDW waveguide 170 with laser light. The at least one optical fiber 190 (or, more generally, a plurality of optical fibers 190_1, 190_2) is fixedly connected to an input of the at least one SPLDW waveguide 170 (or, e.g., to the inputs of single SPLDW waveguides 170_1, 170_2). The optical fibers 190_1, 190_2 may be implemented as a light-guiding fiber-optics array with each optical fiber 190_1, 190_2 being firmly connected to a corresponding SPLDW waveguide 170_1, 170_2. In particular, the optical fibers 190_1, 190_2 are permanently connected to the inputs of the respective SPLDW waveguides 170_1, 170_2. This approach also reduces the susceptibility of the micro-fabricated device 100 to drift and vibration as well as the space requirements.

In other examples, the at least one SPLDW waveguide 170 of the micro-fabricated device 100 may, e.g., be supplied with laser light by other means for propagating laser beam(s) such as by free beam optics, for example.

The SPLDW waveguide(s) 170_1, 170_2 may extend in a plane which is substantially parallel to the upper main surface 120A (or, differently stated, which is perpendicular to the Z-direction). In particular, the entire array of SPLDW waveguides 170_1, 170_2 from their input to their exit may extend in this "horizontal" plane. The optionally selectable curvature of the SPLDW waveguides 170_1, 170_2 may, in particular, also remain in this plane.

After fixedly attaching the dielectric element 160 to the first substrate 120, the micro-fabricated device 100 is no longer positional adjustable. While this feature may necessitate high precision assembly of the parts, it allows, on the other hand, for high robustness and insensitivity to vibrations.

In Figure 1, the dashed line 100_1 may represent the boundary between external environment and vacuum and cryogenic environment. Laser light may enter the vacuum and cryogenic environment of the micro-fabricated device 100 via the feedthrough 195 of a vacuum and cryogenic chamber (or cryostat - not shown), which is passed by the at least one (or the array of) optical fiber (s) 190 or 190_1, 190_2,... .

Figure 2 illustrates a cross-sectional partial view of an exemplary micro-fabricated 2D device 200. The micro-fabricated device 200 is similar to micro-fabricated device 100, except that the connection of the optical fiber 190 to the dielectric element 160 is at a surface of the dielectric element 160 parallel to the Y-direction rather than at a surface parallel to the X-direction as in Figure 1. In view of all other aspects and features, reference is made to the description above to avoid reiteration.

It is to be noted that the micro-fabricated devices 100, 200 of Figures 1 and 2 may include more than one dielectric element 160. In particular, a second dielectric element (not shown) may be arranged at the right side of the micro-fabricated device 200, i.e. in a mirrored relationship with respect to the position of the ion 180. It is also possible that dielectric elements (not shown) are arranged in the X-direction of the micro-fabricated device 100, 200, i.e. in a direction perpendicular to the direction of the (e.g. bar-shaped) dielectric element 160. In other words, laser light may be directed to the ion(s) 180 via SPLDW waveguides 170, 170_1, 170_2 from one, two, three or all four lateral sides.

Figure 3 illustrates a schematic plan view of an exemplary micro-fabricated device 300. The micro-fabricated device 300 may be identical or similar to the micro-fabricated device 100 (Figure 1). The micro-fabricated device 300 may include a plurality of ion trapping zones, of which two, namely TZ1 and TZ2, are shown. For example, in each ion trapping zone TZ1, TZ2 a plurality of ions 180 may be trapped. In Figure 3 the electrode structure 130 is not shown for ease of illustration.

For example, the lower dielectric element 160 may comprise a plurality of SPLDW waveguides 170 wherein a subset (e.g. two waveguides) is configured to direct laser light towards the same ion 180. Further, the lower dielectric element 160 may comprise a plurality of SPLDW waveguides 170 configured to direct laser light towards at least a first ion 180 trapped in the first ion trapping zone TZ1 and a second ion 180 trapped in the second ion trapping zone.

The upper dielectric element 160 also includes SPLDW waveguides 170 for both (in general: a plurality of) ion trapping zones TZ1, TZ1. In the specific example shown, only one SPLDW waveguide 170 per ion 180 is implemented in the upper dielectric element 160. However, the upper dielectric element 160 may likewise include a plurality of SPLDW waveguides 170 per ion 180.

The ion trapping zones TZ1, TZ2 can be designed, for example, as linear ion traps allowing the ions 180 to move in the Y-direction (see double arrow). Differently stated, the micro-fabricated device 300 may be configured to shuttle ions 180 from the first ion trapping zone TZ1 to the second ion trapping zone TZ2 and/or in opposite direction.

The ion trapping zones TZ1, TZ2 may implement different functionalities in terms of ion generation, ion handling and/or ion control. For example, an ion trapping zone TZ1, TZ2 may be a loading zone, a storage zone or a processing zone. In a loading zone the ions 180 are trapped and cooled by employing laser cooling. Typically, ions 180 are generated by thermal- or laser-based evaporation of bulk material to generate neutral atoms. Laser-based ionization of the neutral atoms allows for trapping. The ions 180 are then cooled by employing laser cooling and stored in the loading zone or in a storage zone for later use. Typically, the evaporation and the ionization require relatively high energy laser light.

Trapped and cooled ions 180 may then be transferred from the loading zone or the storage zone to a processing zone. In the processing zone, quantum operations between trapped ions 180 may be carried out. Further, if the ions 180 are trapped as qubits, the qubit state may optionally be read out. Typically, a processing zone requires the access of laser light for laser-based state preparation of trapped ions 180 and laser light for reading out the qubit states.

From the examples above, it is apparent that the SPLDW waveguides 170 may serve a variety of different functions. The dielectric element 160 may include SPLDW waveguides 170 for guiding laser light to ionize and/or to cool and/or to prepare a qubit state and/or to read a qubit state and/or to dump laser light out of the micro-fabricated device 300. For example, all laser-optical functions of the micro-fabricated device 300 may be performed through the SPLDW waveguides 170 integrated in the micro-fabricated device 300. However, it is also possible that specific laser light (e.g. for laser-based evaporation) is coupled via free space optics, while other functions are performed through SPLDW waveguides 170.

The interface between the dielectric element and free space (e.g., formed by the exit surface 160S of the dielectric element 160, for example) may be designed to perform a particular optical function as described above. The optical function may depend, for example, on the function of the laser light passing through the respective SPLDW waveguide.

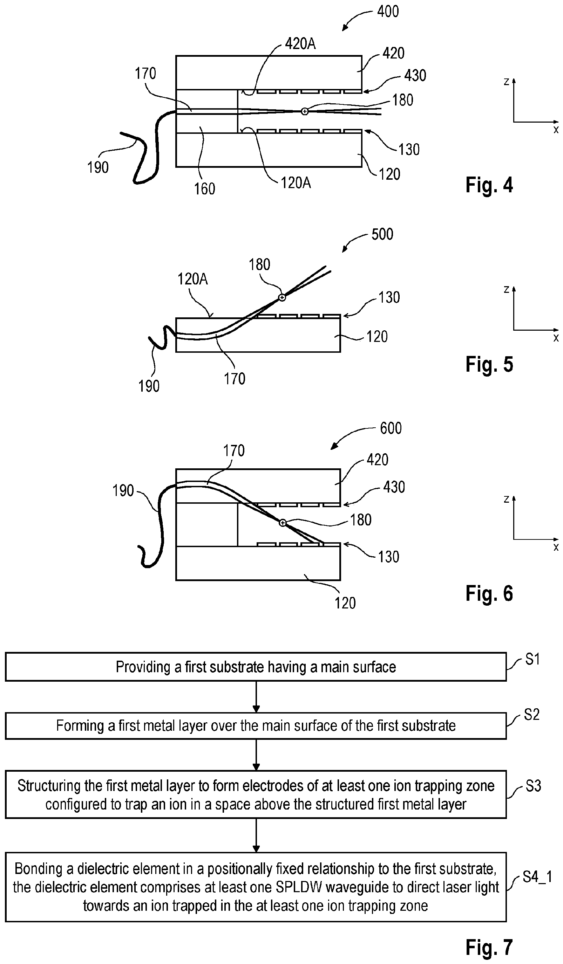

Figure 4 illustrates a 3-dimensional (3D) micro-fabricated device 400 for controlling trapped ions. The micro-fabricated device 400 may have the same construction as any of the micro-fabricated devices 100, 200 and 300, and reference is made to the above description to avoid reiteration. The 3D micro-fabricated device 400 further includes a second substrate 420 which is spaced apart from the first substrate 120. The at least one ion trapping zone (e.g., TZ1 or TZ2, see Figure 3) is located in a space between the first substrate 120 and the second substrate 420. To that end, a structured second metal layer 430 may be disposed over a lower main surface 420A of the second substrate 420 facing the upper main surface 120A of the first substrate 120. The structured second metal layer 420 may include electrodes of the at least one ion trapping zone located between the structured first and second metal layers 130, 430. Similar to the structured first metal layer 130, the structured second metal layer 430 may also contain RF electrodes and DC electrodes which may, e.g., be patterned as stripes. Features disclosure for the first substrate 120 and the structured first metal layer 130 may likewise apply to the second substrate 420 and the structured second metal layer 430, respectively.

In micro-fabricated device 400 the dielectric element 160 may form a spacer structure between the first substrate 120 and the second substrate 420. That is, in the exemplary micro-fabricated device 400, the dielectric element 160 provides for an optical function, namely to integrate the at least one SPLDW waveguide 170 in the micro-fabricated device 400, and for a mechanical function, namely to define the distance between the first and second substrates 120, 420 and guarantee the robustness of the micro-fabricated device 400.

The dielectric element 160 may include or be of glass, in particular quartz glass, borosilicate glass, alkali-free glass, sapphire, or fused silica. These materials, and in addition semiconductor materials such as, e.g., Si, may also be used as materials for the first and/or second substrates 120, 420. In particular, quartz glass, borosilicate glass and sapphire are excellent substrate materials and/or dielectric element materials due to their low RF loss angle and high optical transparency. Fused silica is an excellent material for the dielectric element 160.

For example, referring to Figures 1, 2 and 4, the first substrate 120 may be of silicon and the dielectric element 160 may be of fused silica. The second substrate 420 may (also) be of silicon or of glass (e.g. quartz glass or borosilicate glass or alkali-free glass).

Referring to Figure 5, a micro-fabricated device 500 includes a first substrate 120, which is made of a transparent material, e.g. one of the materials mentioned above. The structured first metal layer 130 is disposed over the upper main surface 120A of the first substrate 120. The ion trapping zone is again located above the electrodes formed by the structured first metal layer 130. In the example shown in Figure 5, the at least one SPLDW waveguide 170 (or array of SPLDW waveguides as disclosed above) is formed in the first substrate 120. The SPLDW waveguide 170 is configured to direct laser light towards the trapped ion 180 in the at least one ion trapping zone (e.g., TZ1 and/or TZ2, see Figure 3).

Stated differently, in the micro-fabricated device 500, the first substrate 120 serves both as a structural part of the micro-fabricated ion trap device 500 and as the dielectric element which accommodates the integrated SPLDW waveguide 170. Features disclosed above for these parts also apply to the micro-fabricated device 500. This implementation guarantees for a maximum of mechanical robustness and insensitivity to vibrations of the micro-fabricated device 500.

While Figure 5 illustrates, for example, a 2D micro-fabricated device 500, the first substrate 120 carrying the SPLDW waveguide 170 may also be implemented in all of the aforementioned micro-fabricated devices 100, 200, 300, 400, in particular in 3D devices and/or in devices using a dielectric element 160 with SPLDW waveguide(s) 170 attached to the first substrate 120.

Figure 6 illustrates another example of a micro-fabricated device 600. The micro-fabricated device 600 is similar to micro-fabricated device 400, except that the at least one SPLDW waveguide 170 is formed in the second substrate 420. To this end, the second substrate 420 is made of a transparent dielectric material, e.g. one of the transparent dielectric materials mentioned above.

It should be noted that the concepts, variations and specific features of the micro-fabricated devices 100-600 can be combined and selectively interchanged. For example, the micro-fabricated device 600 may be provided with a first substrate 120, as shown in Figure 5. Further, all micro-fabricated devices 100-600 may be equipped with dielectric elements 160 and/or spacer structures accommodating SPLDW waveguide(s) 170 as illustrated in Figures 1-4. Generally, in all embodiments the elements 160 or substrates 120, 420 carrying the SPLDW waveguide(s) 170 or the array(s) of SPLDW waveguides 170_1, 170_2 may be integrated by micro-fabrication techniques in the respective micro-fabricated device 100-600.

The illustrations of Figures 1-6 are partial views of one (Figures 1, 2, 4, 5) or two (Figure 3) ion trapping zones TZ1, TZ2. In general, these structures can be understood as repeating building blocks of a scalable device in which a large number of corresponding micro-fabricated devices 100-600 are arranged side by side in a lateral dimension.

Figure 7 is a flowchart illustrating exemplary stages of a method of manufacturing a micro-fabricated device 100-600 for controlling trapped ions. At S1 a first substrate having a main surface is provided.

At S2 a first metal layer is formed over the main surface of the first substrate. The first metal layer may, e.g., be formed by micro-fabrication techniques such as, e.g., chemical vapor deposition (CVD), physical vapor deposition (PVD), sputtering and/or plating techniques (e.g. electroless plating, galvanic plating, etc.).

At S3 the first metal layer is structured to form electrodes of at least one ion trapping zone configured to trap an ion in a space above the structured first metal layer. Generally, micro-fabrication techniques for structuring may, e.g., involve photolithography methods (e.g. including photoresist application, patterning, etching) and other structuring techniques.

At S4 a dielectric element is bonded in a positionally fixed relationship to the first substrate. The dielectric element comprises at least one SPLDW waveguide configured to direct laser light towards an ion trapped in the at least one ion trapping zone.

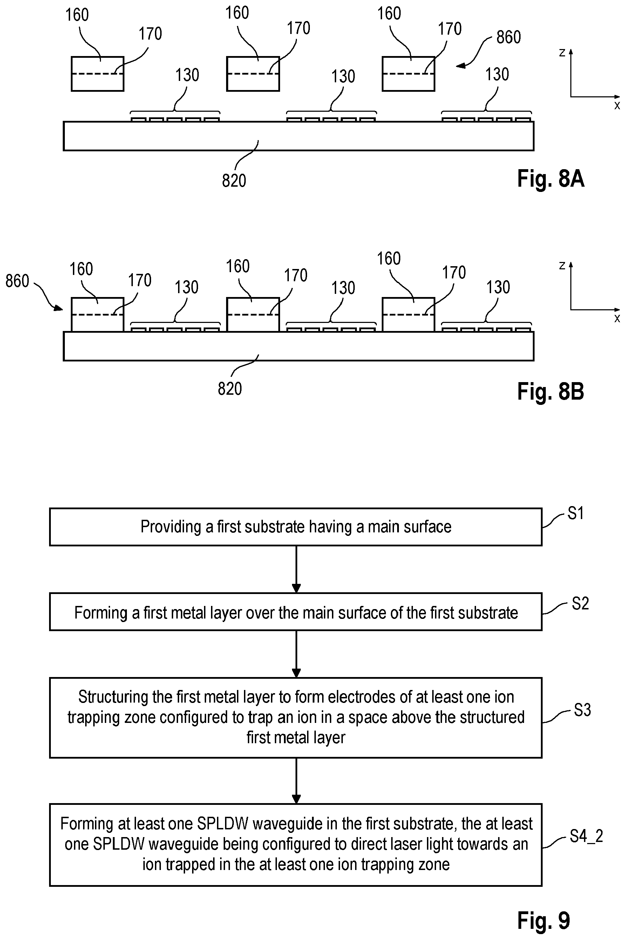

For example, the method of Figure 7 may be carried out on wafer level. Figure 8A illustrates a structured spacer waver 860. The structured spacer wafer 860 includes a plurality of spacer structures. The spacer structures may be formed by dielectric elements 160 with integrated SPLDW waveguides 170.

The first substrate 120 is represented by a substrate wafer 820. The substrate wafer 820 may, e.g., be made of any of the aforementioned materials, e.g. in particular of silicon. The structured spacer wafer 860 may, e.g., be made of any of the aforementioned transparent dielectric materials, in particular of fused silica.

In one example, the SPLDW waveguides 170 are written in the structured spacer wafer 860, i.e. on wafer-level. In other examples, the SPLDW waveguides 170 may be written in the singulated spacer structures (e.g. dielectric elements 160), i.e. on chip-level.

Referring to Figure 8B, the structured spacer wafer 860 is bonded to the substrate wafer 820. Optionally, a second substrate wafer (not shown) including the second substrates 420 may be wafer-bonded to the structured spacer wafer 860.

Subsequently, the wafer stack may be separated into multiple micro-fabricated devices 100-600 by wafer dicing, e.g. mechanical sawing or stealth dicing. Each chip (see, e.g., the micro-fabricated devices 100-600) includes the integrated SPLDW waveguides 170 (e.g. in form of arrays of integrated SPLDW waveguides 170).

Other processes of manufacturing the micro-fabricated devise 100-600 are also possible. For example, the SPLDW waveguides 170 may be generated on chip-level. Further, wafer separation into chips may be performed before assembling the dielectric elements 160 on the first substrate 120 (or on the first substrate wafer 820), and the assembly process may be carried out by using a pick-and-place method.

Figure 9 is a flowchart illustrating exemplary stages of another method of manufacturing a micro-fabricated device. The method may include the stages S1 to S3 of Figure 7. Further, at S4_2, at least one SPLDW waveguide is formed (written) in the first substrate, the at least on SPLDW waveguide being configured to direct laser light towards an ion trapped in the at least one ion trapping zone.

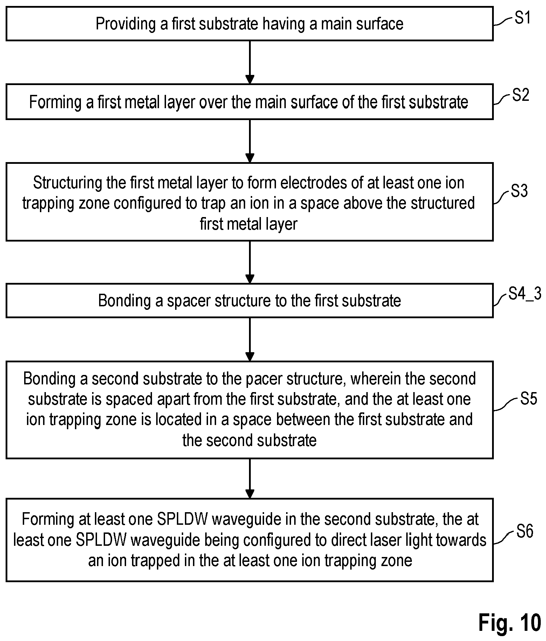

Referring to Figure 10, another exemplary method of manufacturing a micro-fabricated device for controlling trapped ions includes, e.g., the steps S1 to S3 of Figure 7. At S4_3, a spacer structure is bonded on the first substrate.

At S5 a second substrate is bonded to the spacer structure, wherein the second substrate is spaced apart from the first substrate and the at least one ion trapping zone is located in a space between the first substrate and the second substrate.

At S6 at least one SPLDW waveguide is formed in the second substrate, the at least one SPLDW waveguide being configured to direct laser light towards an ion trapped in the at least one ion trapping zone. The SPLDW waveguide writing at S6 may be carried out on wafer-level, i.e. before S5, or on chip-level, i.e. after S5.

### EXAMPLES

The following examples pertain to further aspects of the disclosure:
Example 1 is a micro-fabricated device for controlling trapped ions includes a first substrate having a main surface. A structured first metal layer is disposed over the main surface of the first substrate. The structured first metal layer includes electrodes of at least one ion trapping zone configured to trap an ion in a space above the structured first metal layer. A dielectric element is fixedly attached to the first substrate, wherein the dielectric element comprises at least one short-pulse-laser direct written waveguide configured to direct laser light towards an ion trapped in the at least one ion trapping zone.
In Example 2, the subject matter of Example 1 can optionally include wherein the dielectric element is of glass, quartz glass, alkali-free glass, borosilicate glass, sapphire, or fused silica.
In Example 3, the subject matter of Example 1 or 2 can optionally include wherein the SPLDW waveguide has a curved shape to redirect the laser light towards the trapped ion.
In Example 4, the subject matter of Example 1 or 2 can optionally include wherein the SPLDW waveguide extends in a plane which is substantially parallel to the main surface.
In Example 5, the subject matter of any of the preceding Examples can optionally further include at least one optical fibre for guiding the laser light, the at least one optical fibre being fixedly connected to an input of the at least one SPLDW waveguide.
In Example 6, the subject matter of any of the preceding Examples can optionally further include a second substrate spaced apart from the first substrate, wherein the at least one ion trapping zone is located in a space between the first substrate and the second substrate, and the dielectric element forms a spacer structure between the first substrate and the second substrate.
In Example 7, the subject matter of any of the preceding Examples can optionally include wherein the dielectric element comprises a plurality of SPLDW waveguides configured to direct laser light towards the same ion trapped in the ion trapping zone.
In Example 8, the subject matter of any of the preceding Examples can optionally include wherein the dielectric element comprises a plurality of SPLDW waveguides configured to direct laser light towards at least a first ion trapped in the ion trapping zone and a second ion trapped in another ion trapping zone.
Example 9 is a micro-fabricated device for controlling trapped ions, the device including a first substrate having a main surface; a structured first metal layer disposed over the main surface of the first substrate, the structured first metal layer comprising electrodes of at least one ion trapping zone configured to trap an ion in a space above the structured first metal layer; and at least one short-pulse-laser direct written waveguide, referred to as SPLDW waveguide, configured to direct laser light towards an ion trapped in the at least one ion trapping zone, wherein the at least one SPLDW waveguide is formed in the first substrate, the subject matter of any preceding Example can optionally include wherein the electrode of the structured second metal layer is an RF electrode of the ion trap.
Example 10 is a micro-fabricated device for controlling trapped ions, the device including a first substrate having a main surface; a structured first metal layer disposed over the main surface of the first substrate, the structured first metal layer comprising electrodes of at least one ion trapping zone configured to trap an ion in a space above the structured first metal layer; a second substrate spaced apart from the first substrate, wherein the at least one ion trapping zone is located in a space between the first substrate and the second substrate, and wherein the second substrate comprises at least one short-pulse-laser direct written waveguide, referred to as SPLDW waveguide, configured to direct laser light towards an ion trapped in the at least one ion trapping zone.
Example 11 is a method of manufacturing a micro-fabricated device for controlling trapped ions, the method comprising: providing a first substrate having a main surface; forming a first metal layer over the main surface of the first substrate; structuring the first metal layer to form electrodes of at least one ion trapping zone configured to trap an ion in a space above the structured first metal layer; and bonding a dielectric element in a positionally fixed relationship to the first substrate, the dielectric element comprises at least one short-pulse-laser direct written waveguide, referred to as SPLDW waveguide, configured to direct laser light towards an ion trapped in the at least one ion trapping zone.
In Example 12, the subject matter of Example 11 can optionally include wherein bonding comprises wafer bonding of a structured dielectric wafer comprising a plurality of dielectric elements to the first substrate.
Example 13 is a method of manufacturing a micro-fabricated device for controlling trapped ions, the method comprising: providing a first substrate having a main surface; forming a first metal layer over the main surface of the first substrate; structuring the first metal layer to form electrodes of at least one ion trapping zone configured to trap an ion in a space above the structured first metal layer; and forming at least one short-pulse-laser direct written waveguide, referred to as SPLDW waveguide, in the first substrate, the at least one SPLDW waveguide being configured to direct laser light towards an ion trapped in the at least one ion trapping zone.
Example 14 is a method of manufacturing a micro-fabricated device for controlling trapped ions, the method comprising: providing a first substrate having a main surface; forming a first metal layer over the main surface of the first substrate; structuring the first metal layer to form electrodes of at least one ion trapping zone configured to trap an ion in a space above the structured first metal layer; bonding a spacer structure to the first substrate; bonding a second substrate to the spacer structure, wherein the second substrate is spaced apart from the first substrate and the at least one ion trapping zone is located in a space between the first substrate and the second substrate; and forming at least one short-pulse-laser direct written waveguide, referred to as SPLDW waveguide, in the second substrate, the at least one SPLDW waveguide being configured to direct laser light towards an ion trapped in the at least one ion trapping zone.
In Example 15, the subject matter of Example 14 can optionally include wherein bonding of the second substrate comprises wafer bonding of the second substrate to a structured spacer wafer comprising a plurality of spacer structures.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

## Claims

1. A micro-fabricated device for controlling trapped ions, the device comprising:
a first substrate having a main surface;
a structured first metal layer disposed over the main surface of the first substrate, the structured first metal layer comprising electrodes of at least one ion trapping zone configured to trap an ion in a space above the structured first metal layer; and
a dielectric element fixedly attached to the first substrate, wherein the dielectric element comprises at least one short-pulse-laser direct written waveguide, referred to as SPLDW waveguide, configured to direct laser light towards an ion trapped in the at least one ion trapping zone.

2. The micro-fabricated device of claim 1, wherein the dielectric element is of glass, quartz glass, alkali-free glass, borosilicate glass, sapphire, or fused silica.

3. The micro-fabricated device of claim 1 or 2, wherein the SPLDW waveguide has a curved shape to redirect the laser light towards the trapped ion.

4. The micro-fabricated device of claim 1 or 2, wherein the SPLDW waveguide extends in a plane which is substantially parallel to the main surface.

5. The micro-fabricated device of any of the preceding claims, further comprising:
at least one optical fibre for guiding the laser light, the at least one optical fibre being fixedly connected to an input of the at least one SPLDW waveguide.

6. The micro-fabricated device of any of the preceding claims, further comprising:
a second substrate spaced apart from the first substrate, wherein the at least one ion trapping zone is located in a space between the first substrate and the second substrate, and the dielectric element forms a spacer structure between the first substrate and the second substrate.

7. The micro-fabricated device of any of the preceding claims, wherein the dielectric element comprises a plurality of SPLDW waveguides configured to direct laser light towards the same ion trapped in the ion trapping zone.

8. The micro-fabricated device of any of the preceding claims, wherein the dielectric element comprises a plurality of SPLDW waveguides configured to direct laser light towards at least a first ion trapped in the ion trapping zone and a second ion trapped in another ion trapping zone.

9. A micro-fabricated device for controlling trapped ions, the device comprising:
a first substrate having a main surface;
a structured first metal layer disposed over the main surface of the first substrate, the structured first metal layer comprising electrodes of at least one ion trapping zone configured to trap an ion in a space above the structured first metal layer; and
at least one short-pulse-laser direct written waveguide, referred to as SPLDW waveguide, configured to direct laser light towards an ion trapped in the at least one ion trapping zone, wherein the at least one SPLDW waveguide is formed in the first substrate.

10. A micro-fabricated device for controlling trapped ions, the device comprising:
a first substrate having a main surface;
a structured first metal layer disposed over the main surface of the first substrate, the structured first metal layer comprising electrodes of at least one ion trapping zone configured to trap an ion in a space above the structured first metal layer;
a second substrate spaced apart from the first substrate, wherein the at least one ion trapping zone is located in a space between the first substrate and the second substrate, and wherein
the second substrate comprises at least one short-pulse-laser direct written waveguide, referred to as SPLDW waveguide, configured to direct laser light towards an ion trapped in the at least one ion trapping zone.

11. A method of manufacturing a micro-fabricated device for controlling trapped ions, the method comprising:
providing a first substrate having a main surface;
forming a first metal layer over the main surface of the first substrate;
structuring the first metal layer to form electrodes of at least one ion trapping zone configured to trap an ion in a space above the structured first metal layer; and
bonding a dielectric element in a positionally fixed relationship to the first substrate, the dielectric element comprises at least one short-pulse-laser direct written waveguide, referred to as SPLDW waveguide, configured to direct laser light towards an ion trapped in the at least one ion trapping zone.

12. The method of claim 11, wherein bonding comprises wafer bonding of a structured dielectric wafer comprising a plurality of dielectric elements to the first substrate.

13. A method of manufacturing a micro-fabricated device for controlling trapped ions, the method comprising:
providing a first substrate having a main surface;
forming a first metal layer over the main surface of the first substrate;
structuring the first metal layer to form electrodes of at least one ion trapping zone configured to trap an ion in a space above the structured first metal layer; and
forming at least one short-pulse-laser direct written waveguide, referred to as SPLDW waveguide, in the first substrate, the at least one SPLDW waveguide being configured to direct laser light towards an ion trapped in the at least one ion trapping zone.

14. A method of manufacturing a micro-fabricated device for controlling trapped ions, the method comprising:
providing a first substrate having a main surface;
forming a first metal layer over the main surface of the first substrate;
structuring the first metal layer to form electrodes of at least one ion trapping zone configured to trap an ion in a space above the structured first metal layer;
bonding a spacer structure to the first substrate;
bonding a second substrate to the spacer structure, wherein the second substrate is spaced apart from the first substrate and the at least one ion trapping zone is located in a space between the first substrate and the second substrate; and
forming at least one short-pulse-laser direct written waveguide, referred to as SPLDW waveguide, in the second substrate, the at least one SPLDW waveguide beinng configured to direct laser light towards an ion trapped in the at least one ion trapping zone.

15. The method of claim 14, wherein bonding of the second substrate comprises wafer bonding of the second substrate to a structured spacer wafer comprising a plurality of spacer structures.
